# EUROPEAN PATENT SPECIFICATION

(11) **EP 2 521 150 B1**
(45) Date of publication and mention of the grant of the patent: **23.10.2013**
(21) Application number: 12158645.7
(22) Date of filing: 08.03.2012
(51) Int. Cl.: H01H 9/22, B60L 3/00, H01H 9/02, H01H 51/27, H01H 19/36

(54) **Contactor, in particular for disconnecting batteries in electrical wiring systems on board vehicles**
Schütz, insbesondere zum Abschalten von Batterien in elektrischen Verkabelungssystemen in Fahrzeugen
Contacteur, en particulier pour déconnecter des batteries dans des systèmes de câblage électrique à bord de véhicules

(30) Priority: 05.05.2011 IT TO20110397
(43) Date of publication of application: 07.11.2012
(73) Proprietor: MENBER'S S.p.A., 37045 Legnago (Verona) (IT)
(72) Inventor: Forsberg, Per Anders, F-13100 Aix-en-Provence (FR); Crovetti, Claudio, I-46030 Virgilio (Mantova) (IT); Tinto, Massimiliano, I-37063 Isola della Scala (Verona) (IT)
(74) Representative: Meindl, Tassilo

(56) References cited:
- EP-A1- 0 863 531
- GB-A- 1 486 937

## Description

### Field of the invention

The present invention relates to a contactor, in particular of the type designed for use as battery disconnector in electrical wiring systems on board vehicles.

### Description of the prior art

The aforesaid contactors are normally used for connecting selectively a load, i.e., the electrical wiring system on board a vehicle, to a supply source, i.e., the battery of a vehicle. Contactors of this type generally have a casing bearing two or more fixed contacts and a mobile shaft axially bearing a mobile contact that co-operates with the fixed contacts. The shaft is typically coupled to an electromagnetic control device designed to displace the shaft from an operative first position, where the contacts are open, to an operative second position, where the contacts are closed.

For example, the document No. EP 0 863 531 describes a contactor comprising a stationary base bearing one or more fixed contacts, a mobile shaft axially bearing one or more mobile contacts that co-operate frontally with the fixed contacts, elastic means that tend to push the shaft towards an operative first position, and an electromagnetic control device designed to produce a force that recalls the shaft towards an operative second position against the action of the aforesaid elastic means.

For instance, the electromagnetic control device can comprise for this purpose an electric coil. In this way, one of the operative positions of the contactor (position of contacts open or of contacts closed) is an unstable configuration that is maintained, against the thrust of the elastic means, by keeping the electric coil energized, which produces an electromagnetic force of return on the shaft bearing the mobile contacts.

To prevent this problem, the document No. EP 0 863 521 describes a solution that enables also reduction of the electrical consumption of the coil. In particular, a mechanical latch is operatively associated to the shaft and to the base, where the latching element has two stable retention positions corresponding to the operative first and second positions of the shaft. In this way, the mechanical latch can be displaced from one stable retention position to another upon each activation of the coil.

For reasons of safety, frequently coupled to the contactor, in particular to the shaft, is a mechanical mechanism for manual switching of the electrical connection between the battery and the load. For example, a switch can be used for this purpose. Said switch normally comprises an inoperative position, where the shaft can be displaced, i.e., where the electrical connection between the fixed contacts can be closed or opened by means of the electromagnetic control device, and an operative position, where the switch interrupts the electrical connection between the fixed contacts.

More specifically, the present invention relates to a contactor according to the preamble of Claim 1, which is known, e.g. from document GB 1 486 937 A.

### Object and summary of the invention

The inventors have found that frequently users do not pay much attention to the position of the manual switch and connect (or disconnect) cables, such as for example the cables of the load or of the battery, whilst the load is active and the contactor is in the position of contacts closed. However, this can cause the position of contacts closed and supply of the vehicle is activated, a high current can pass through the contactor and the switch. In these conditions, when the electrical connection is interrupted, electric arcs can be set up that can damage the contacts of the switch and/or interfere with operation of the electrical wiring system.

The object of the invention is to overcome the drawbacks outlined above.

According to the invention, said object is achieved thanks to a contactor having the characteristics recalled in the ensuing claims.

The claims form an integral part of the technical teaching provided herein in relation to the invention.

In various embodiments, the contactor comprises a stationary casing bearing at least two fixed contacts.

In various embodiments, said fixed contacts are covered by a protection.

In various embodiments, the contactor also comprises mechanical switching means designed to interrupt electrical connection between the fixed contacts.

In various embodiments, the contactor also comprises a handle accessible from outside the casing for governing the mechanical switching means, wherein the handle can be displaced between an inoperative first position and an operative first position, in which operative first position the mechanical means interrupt the electrical connection between the fixed contacts.

According to the invention, the handle and the protection have shapes configured to prevent the protection from being removed from the contactor when the handle is in the inoperative first position.

For example, in various embodiments, the protection is fixed to the casing via appropriate fixing means and the handle has a shape such that it covers at least one of the fixing means, rendering it inaccessible, when the handle is in the inoperative first position.

In various embodiments, the handle can also be displaced into an operative second position, in which the mechanical switching means interrupt the electrical connection between the fixed contacts and where the operative second position is a position in which the handle can be removed from the contactor, for example to render the at least one fixing means accessible.

For example, in various embodiments, the casing comprises an opening for coupling the handle and the mechanical switching means together. In this case, the shape of the opening and the cross section of the portion of the handle are substantially complementary to guarantee that the portion of the handle can be pulled out of the opening only when the handle is in the operative second position.

### Brief description of the annexed drawings

The invention will now be described, purely by way of non-limiting example, with reference to the annexed drawings, wherein:
- Figure 1 is a schematic perspective view of a contactor according to the present invention;
- Figure 2 is an exploded perspective view of the contactor of Figure 1;
- Figures 3 to 7 show details of various components of the contactor of Figure 2;
- Figures 8a to 8f are views illustrating various details of the handle of the manual switching mechanism;
- Figures 9 to 13 are views illustrating the sequence of operation of the handle and of the manual switching mechanism; and
- Figures 14 and 15 are front views of the section of the contactor of Figure 1.

### Detailed description of embodiments

In the ensuing description, various specific details are illustrated aimed at providing an in-depth understanding of the embodiments. The embodiments may be obtained without one or more of the specific details, or with other methods, components, materials, etc. In other cases, known structures, materials, or operations are not illustrated or described in detail so that various aspects of the embodiments will not be obscured.

The reference to "an embodiment" or "one embodiment" in the framework of the present description is intended to indicate that a particular configuration, structure, or characteristic described in relation to the embodiment is included in at least one embodiment. Hence, phrases such as "in an embodiment" or "in one embodiment" that may be present in different points of this description do not necessarily refer to one and the same embodiment. Moreover, particular conformations, structures, or characteristics can be combined adequately in one or more embodiments.

The references used herein are provided merely for convenience and hence do not define the sphere of protection or the scope of the embodiments.

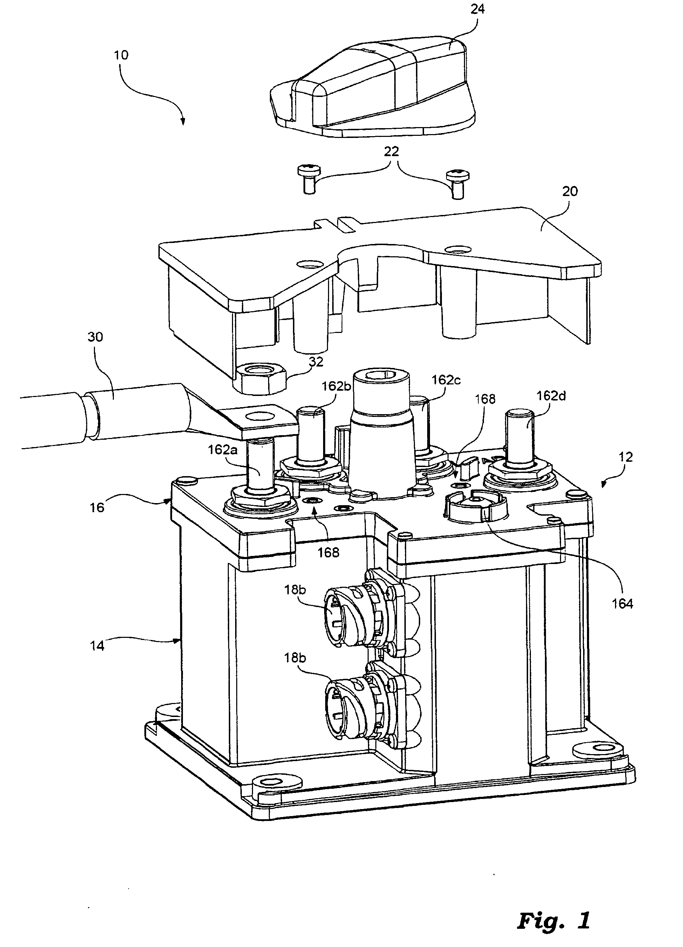

With reference to Figure 1, in one embodiment, the contactor 10 comprises a casing 12 comprising a box body 14 and a lid 16 that carries at least two fixed contacts 162, such as for example pins made of a conductive material.

For example, in the embodiment considered, the lid carries four fixed contacts 162a, 162b, 162c and 162d for connection to a battery and to a load.

For example, said connections can be obtained via conventional electric cables 30, which can also be fixed to the fixed contacts 162 by means of appropriate fixing means, such as for example locknuts 32, where each nut 32 comprises an internal thread that co-operates with a corresponding thread of the respective contact 162.

In particular, in the embodiment considered, the contacts 162a and 162d are connected to the negative terminal and to the positive terminal, respectively, of the battery of the vehicle, whereas the contacts 162b and 162c are connected to the negative terminal and to the positive terminal, respectively, of the load. In this case, to connect the load to the battery of the vehicle the contactor is configured for selectively closing the electrical connection between the contacts 162a and 162b and between the contacts 162c and 162d.

For example, in the embodiment considered, the contactor 10, preferably the lid 16, comprises a pushbutton 164 that can govern switching of the contactor 10. For example, said pushbutton could even close only, and hence never open, the contacts of the contactor 10.

Moreover, control of the contactor 10 can also be remote. For example, in the embodiment considered, the contactor comprises for this purpose at least one connector 18 for transmitting and/or receiving supply signals and/or control signals and/or command signals. For example, in the embodiment considered, the contactor 10 comprises two connectors 18a and 18b, where each connector comprises seven contacts, such as pins. For instance, in the embodiment considered, the contactor 10 can receive through the connectors 18a and 18b at least one remote-control signal or command signal that indicates the fact that the contactor must open or close the electrical connection between the contacts.

In particular, in the embodiment considered, the connectors 18 of the contactor 10 can comprise:
- lines for supplying positive and negative supplies at output (protected, for example, from short-circuits);
- lines for exchanging remote commands for activation and/or de-activation and/or inhibition of functions;
- lines for the transmission of data, such as, for example, a Controller Area Network (CAN) bus;
- input lines for reading external signals;
- output lines for sending commands to external devices;
- auxiliary contacts for synchronizing the alternator of the vehicle with opening/closing of the fixed contacts 162; and/or
- a connection to ground of the device (where not available on the power pins).

In the embodiment considered, the contactor 10 also comprises an optional rigid protection 20, such as for example a protection plate made of a plastic material, which has a shape configured for protecting the fixed contacts 162 when the protection 20 is fixed to the casing 12. For example, in the embodiment considered, said protection 20 is fixed to the lid 16 of the casing 12 via appropriate fixing means in such a way as to cover the fixed contacts 162. For example, in the embodiment considered, said fixing means are screws 22 that co-operate with corresponding threaded holes 168 in the lid 16. Preferably, the screws 22 are screwed into threaded inserts secured by expansion into the lid 16, because a possible thread made directly in the plastic of the lid could in the long run lose its thread.

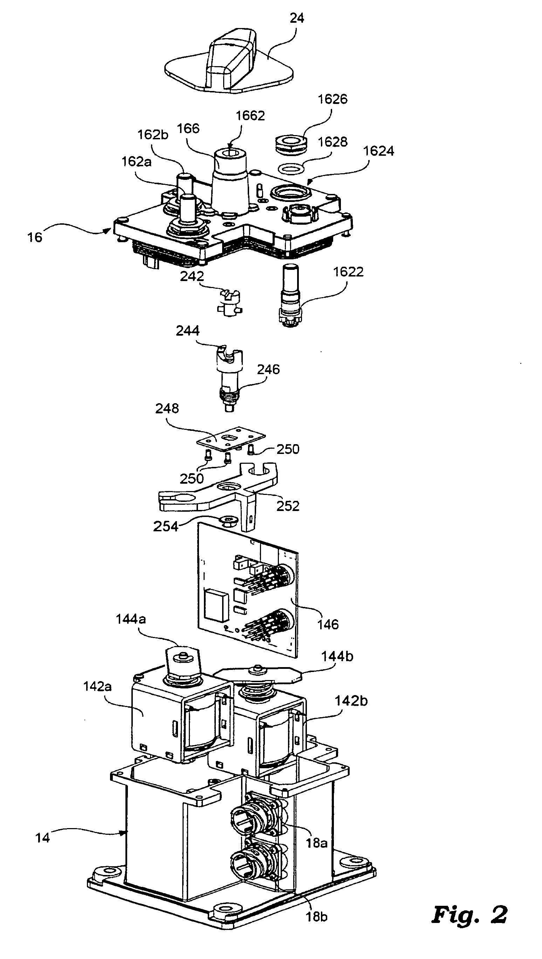

Figure 2 shows a possible embodiment of the internal structure of the contactor of Figure 1.

As mentioned previously, the lid 16 of the contactor 10 comprises a plurality of fixed contacts 162. For example, in the case where the lid 16 is made of a plastic material, it can be injection moulded directly on the fixed contacts 162.

Instead, in the embodiment illustrated in Figures 1 and 2, said fixed contacts 162 are obtained as externally threaded pins 1622, which comprise on the under side a widened portion. Said power pins 1622 are inserted in corresponding openings in the lid 16, such as for example through holes 1624, and fixed on the upper side of the lid 16 by means of locknuts 1626. Preferably, a seal is provided for each fixed contact 162, such as for example an O-ring 1628, which is set between the surface of the lid 16 and the respective nut 1626, in such a way as to render liquid-tight the area of passage of the respective pin 1622.

As mentioned previously, the contactor 10 is configured for selectively closing, for example in response to a signal received from the pushbutton 164, the electrical connection between the fixed contacts 162, i.e., between the contacts 162a and 162b and between the contacts 162c and 162d.

In one embodiment, the contactor 10 comprises for this purpose at least one electromagnetic control device 142 and at least one mobile contact 144, which co-operates with the fixed contacts 162. For example, when the electromagnetic control device 142 is actuated, the mobile contact or contacts 144 are pushed from beneath against the fixed contacts 162 and close the electrical connection between the fixed contacts 162.

In particular, in the embodiment considered, two electromagnetic control devices 142a and 142b, and respectively two mobile contacts 144a and 144b, are used, where each mobile contact 144 is coupled to the shaft of the respective electromagnetic control device 142.

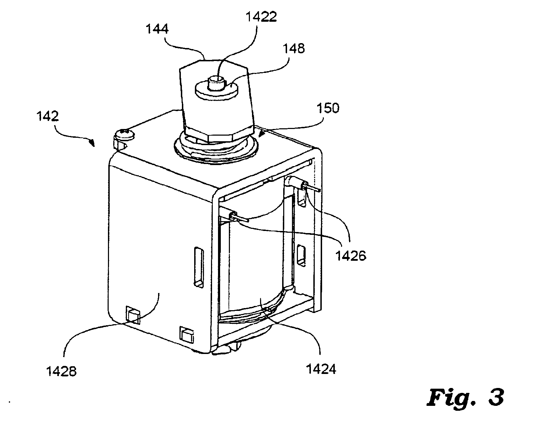

Figure 3 illustrates a possible embodiment of an electromagnetic control device 142.

In the embodiment considered, the electromagnetic control device 142 comprises a stationary casing 1428 and a shaft 1422 axially mobile with respect to the casing 1428; i.e., the shaft 1422 can translate in the direction of its own longitudinal axis, and the movement of the shaft can be controlled by means of the electromagnetic device 142.

For example, in the embodiment considered, the shaft 1422 can be actuated via a coil 1424 set within the casing 1428. The coil 1424 can, for example, be a solenoid comprising two electrical contacts 1426.

In one embodiment, the electromagnetic control device 142 is of the "electrical latching" or "monostable" type. In this case, the electromagnetic control device 142 comprises inside it an elastic element, such as for example a spring, which tends to push (or pull) the shaft towards an operative first position. Instead, when a current is applied to the coil 1424 of the electromagnetic control device 142, a force is generated that pushes the shaft 1422 in an operative second position that is maintained against the tensile stress of the elastic element. This means that one of the two positions is stable, i.e., is a resting position (without supply), whereas the other (with the device supplied) is a position forced as a result of the electromagnetic field.

Instead, in the embodiment considered here, electromagnetic control devices 142 of the "mechanical latching" or "bistable" type are used. Said devices are characterized by two stable positions, i.e., a retention position in which the mobile contact 144 is in the open position and a retention position in which the mobile contact 144 is in the closed position. In particular, said positions are kept stable in a mechanical way thanks to anchorage means, such as for example a cam. Consequently, these electromagnetic control devices consume current only for switching (from on to off, and vice versa) but, once they have reached one or the other position, do not require supply.

In the embodiment considered, the mobile contact 144 is not rigidly fixed to the shaft 1422, but the electromagnetic control device 142 comprises an elastic element 150, such as for example a spring, which tends to push (or pull) the mobile contact 142 upwards, i.e., in the direction of the fixed contacts 162. For example, in the embodiment considered, the shaft 1422 comprises on its upper side a stop ring 148, and the spring 150 tends to push the mobile contact 144 against said stop ring 148. Consequently, the spring 150 is always in a state of compression, even when the mobile contact 144 is in the closed position. In said position, the mobile contact 144 will encounter the obstacle of the fixed contacts 1622, and the spring 150 will guarantee a sufficient pressure of the former on the latter so as to ensure adequate closing of the contact and hence passage of current.

In one embodiment, the contactor 10 also comprises an electrical circuit, mounted, for example, on a printed circuit 146.

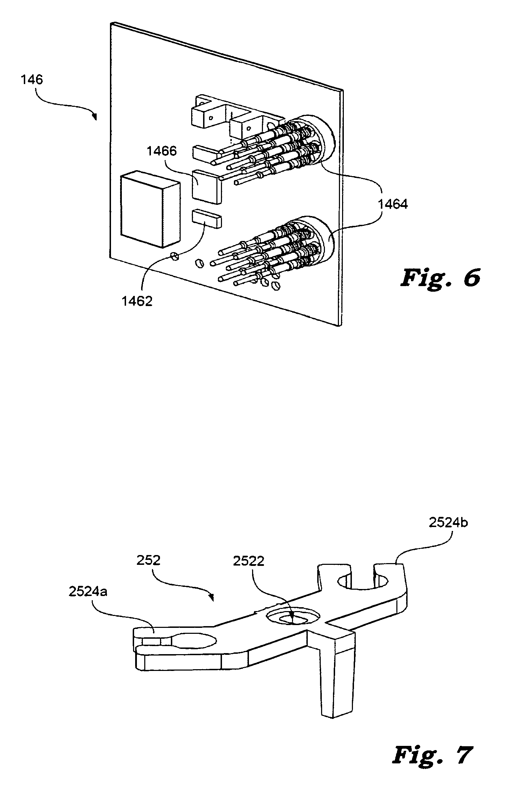

For example, Figure 6 shows an embodiment of such a printed circuit 146.

In the embodiment considered, the circuit 146 comprises a driver 1462 for driving the electromagnetic control devices 142a and 142b, contacts 1464 for the connectors 18a and 18b, and a processing circuit, such as for example a microcontroller 1466 configured for controlling operation of the driver 1462 and communication through the connectors 18a and 18b.

According to the invention, the contactor 10 also comprises mechanical means for manual switching of the electrical connection between the fixed contacts 162 of the contactor 10.

In the embodiment considered, the contactor 10 comprises an actuator that can be operated by a user, such as for example a handle 24, where the actuator 24 operates a mechanism within the contactor 10 for interrupting the electrical connection between the contacts mechanically.

Figure 2 shows a possible embodiment of such a mechanical mechanism configured for interrupting the electrical connection between the contacts 162 in response to operation of the actuator 24.

In the embodiment considered, said mechanism intervenes directly on the connection between the fixed contacts 162 and the mobile contacts 144. For example, in the embodiment considered, the mechanism is configured for pushing the mobile contacts 144 downwards, or in general away from the fixed contacts 162, when a user turns the handle 24 from an operative first position to an operative second position.

In the embodiment considered, the mechanism comprises for this purpose mechanical means that convert the rotational movement of the handle 24 into a movement of translation along the axis of rotation of the handle 24, i.e., in a direction that is parallel to the axes 1422 of the electromagnetic control devices 142.

For example, in the embodiment considered, the mechanical conversion means comprise an actuator 242, a shaft with cam 244, and elastic means, such as for example a spring 246, configured for pressing the shaft with cam 244 against the actuator 242. The shaft 244 is thus axially mobile and is pushed by the spring 246 against the actuator 242.

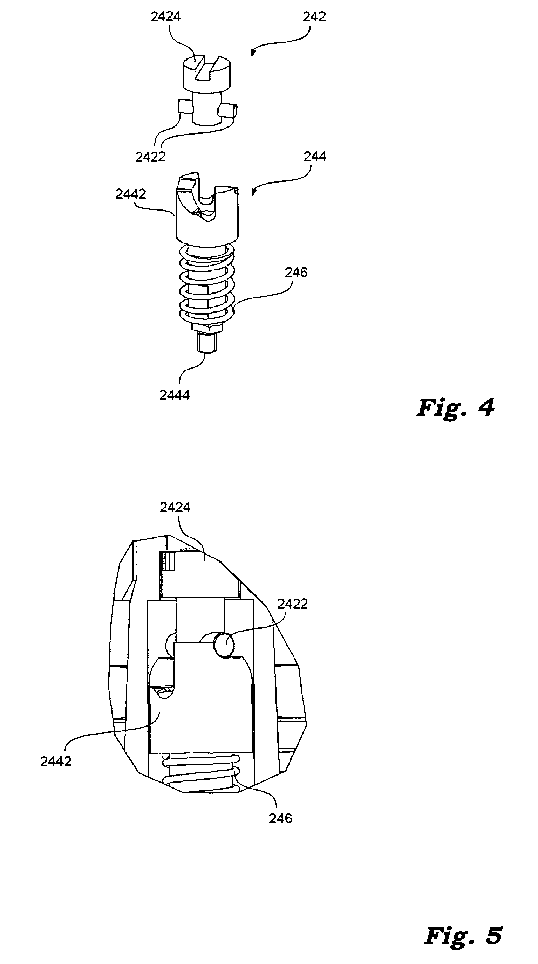

With reference to Figures 5 and 6, the shaft 244 comprises in its upper part a cam 2442 that co-operates with the actuator 242 and in its lower part a portion of smaller diameter, which is used to push the mobile contacts 144 away from the fixed contacts 162.

In the embodiment considered, the actuator 242 comprises, on its upper side, a cut 2424, which co-operates with a corresponding portion of the handle 24 in such a way as to receive the motion of rotation of the handle 24.

In the embodiment considered, the actuator 242 comprises on its under side at least one projection 2422, which co-operates with the cam 2442 of the shaft 244.

Consequently, when the handle 24 is turned, the actuator 242 is also turned, and the projections 2422 co-operate with the cam 2442 to push the shaft 244 axially downwards against the force of the spring 246.

In the embodiment considered, the entire mechanism, i.e., the actuator 242, the shaft with cam 244, and the spring 246, is inserted into a substantially cylindrical hollow portion 166 of the lid 16 and then closed from beneath via a plate 248 comprising an opening in such a way that only the portion 2444 of the shaft 244 projects from the under side of the plate 248 and the plate provides a rest for the spring 246. For example, in the embodiment considered, the plate 248 is fixed to the lid 16 via screws 250.

In the embodiment considered, the cylindrical portion 166 of the lid 16 comprises on its upper side an opening 1662, into which a portion of the handle 24 for operating the actuator 242 can be inserted.

In one embodiment, further means are provided for transmitting the axial movement of the shaft 242 to the mobile contacts 144.

For example, in the embodiment considered, a lamella 252 is used, fixed to the portion 2444 of the shaft 244. For example, the lamella 252 can comprise an opening 2522, in which the portion 2444 of the shaft 244 is inserted, and then the lamella 252 is clamped to the portion 2444 by means of appropriate fixing means, such as for example a nut 254, which co-operates with a corresponding external thread of the portion 2444. In this case, it may also be envisaged that the portion 2444 of the shaft 244 has a cross section configured so as to guarantee that the coupling between the lamella 254 and the shaft 244 is blocked with respect to movements of rotation.

With reference to Figure 6, in the embodiment considered, the lamella 252 comprises for each mobile contact 144 a fin or tab 2524. For example, in the embodiment considered, the lamella 252 comprises two C-shaped portions 2524a and 2524b, which co-operate, with their end portions, with the mobile contacts 144a and 144b, respectively.

As mentioned previously, each shaft 244 of the electromagnetic devices 142 can translate in the direction of its own longitudinal axis, and the movement of the shaft 1422 can be controlled via actuation of the respective electromagnetic device 142.

In one embodiment, each C-shaped portion 2524 is configured for pushing the shaft 1422 of the respective mobile contact 144 downwards.

However, as mentioned previously, the electromagnetic control devices 142 can also comprise anchorage means that define two stable retention positions. In this case, the shaft 1422 cannot be pushed manually downwards, because it is always in a stable position. To prevent this problem, each C-shaped portion 2524 can have a slot or opening that allows passage of the shaft 1422 of the respective electromagnetic control device 142 in such a way that the movement of the shaft 244 is transmitted directly onto the mobile contacts 144, which are then pushed downwards against the force of the springs 150.

As mentioned previously, the manual switching mechanism is normally used when the load must be connected to the battery or, in general, when the user has to work on the connection cables 30.

However, users do not always bring the handle into the position in which the electrical connection is interrupted, and connect (or disconnect) the cables immediately.

However, these operations can cause various problems. For example, when the electrical connection is interrupted, electric arcs may be set up, which can damage the contacts and/or the electrical wiring system on board the vehicle.

In one embodiment, to prevent this problem, it is envisaged that the fixed contacts 162 are not accessible when the handle 24 is in the position in which the contactor is ready, i.e., where the electrical connection between the fixed contacts 162 can be closed via the electromagnetic control device or devices 142.

In one embodiment, this protection is obtained via the handle 24.

For example, in the embodiment considered, the plate 20 has a shape configured for covering all the fixed contacts 162 of the contactor 10, and the plate 20 is fixed via appropriate fixing means, such as for example screws 22, to the lid 16 of the contactor 10.

According to the invention, at least one part of these fixing means 22 is not accessible when the contactor 10 is ready.

For example, in one embodiment, at least one part of the fixing means 22 is not accessible when the handle 24 is in the position in which the contactor 10 is ready and, to access the fixing means 22 the handle 24 must be set first in a position in which the fixed contacts 162 are disconnected via the manual switching mechanism. For example, in the embodiment considered, at least a part of these fixing means 22 is only accessible when the handle 24 has been removed. For this purpose, the handle 24 can be set in at least three different positions:
- an inoperative first position, where the contactor 10 is ready and the electrical connection between the fixed contacts 162 can be closed by means of the electromagnetic control devices 142;
- an operative first position, where the manual switching mechanism interrupts the electrical connection between the fixed contacts 162; and
- an operative second position, where the handle 24 can be removed.

In particular, the handle 24 cannot be removed from the contactor 10 in the first two positions, whilst the electrical connection between the fixed contacts 162 remains interrupted in the operative second position.

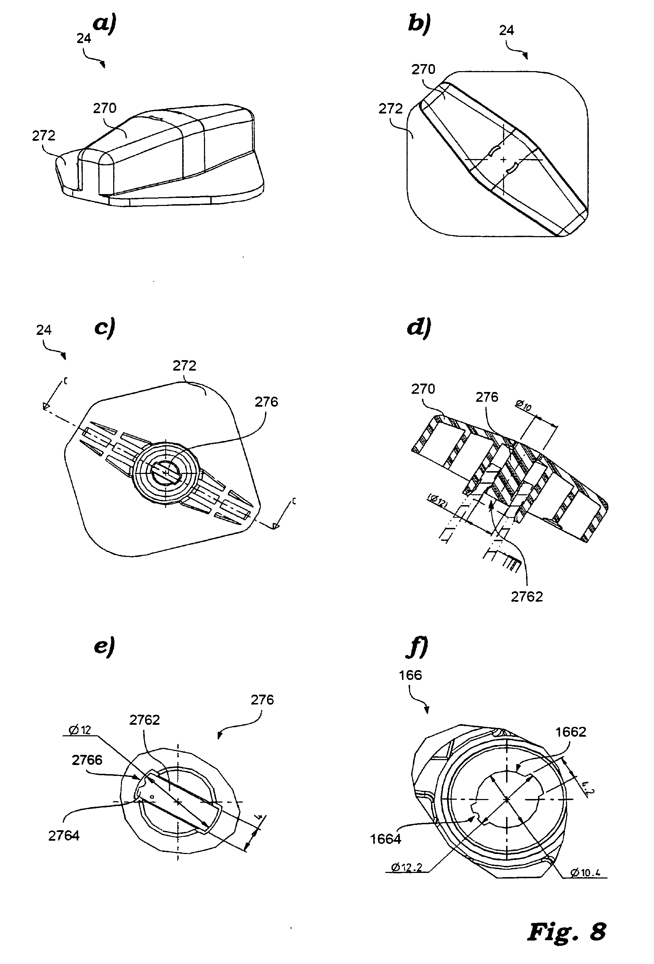

For example, Figures 8a to 8e show an embodiment of the handle 24, and Figure 8f shows an embodiment of the top opening 1662, in which there is inserted the handle 24 for operating the manual switching mechanism within the contactor 10.

In particular, Figure 8b is a view from the upper side of the handle 24, Figure 8c is a view from the under side of the handle 24, and Figure 8d shows a cross section along the axis C-C of Figure 8c.

In the embodiment considered, the handle 24 is cap-shaped and comprises a hollow portion 270 and a base plate 272 having a substantially rectangular shape.

In the embodiment considered, a shaft 276 is rigidly fixed to the hollow portion 270. For example, in the embodiment considered, the shaft 276 is fixed with its upper portion to the centre of the hollow portion 270 via a slotting system. However, the entire handle 24 could also be obtained from a single piece, for example a handle 24 obtained by means of a process of injection moulding.

In the embodiment considered, the shaft 276 comprises on its under side a portion 2762 of larger diameter.

Figure 8e is a view from the under side of the handle 24 and highlights the fact that the portion 2762 has a substantially rectangular section corresponding to the cut in the upper portion 2424 of the actuator 242 of the manual switching mechanism. For example, in the embodiment considered, the cross corresponds to a section of a circle with a diameter of 12 mm.

The section of the portion 2762 thus has a length greater than the diameter of the shaft 276 and a width smaller than the diameter of the shaft 276. For example, in the embodiment considered, the shaft 276 has a diameter of 10 mm, and the bottom portion 2762 has a length of 12 mm and a width of 4 mm.

In the embodiment considered, also the opening 1662 comprises a corresponding rectangular portion to enable the portion 2762 to be inserted in the opening 1662 only in a specific angular position.

Figure 8f is a view from the upper side of the cylindrical portion 166 of the lid 16 and shows a possible embodiment of the opening 1662.

In the embodiment considered, the opening 1662 has a diameter that corresponds substantially to the diameter of the shaft 276, considering also possible tolerances. For example, in the embodiment considered, the opening 1622 has a diameter of 10.4 mm. The opening 1662 also comprises an area complementary to the cross section of the portion 2762. For example, in the embodiment considered, the opening 1662 comprises a substantially rectangular area with a length of 12.2 mm and a width of 4.2 mm.

Preferably, the portion 2762 comprises in the direction of length also at least one projection 2764. For example, in the embodiment considered, the section comprises, on one side, a central cut 2766 that creates two projections 2764.

Said projections 2764 co-operate with complementary projections in the opening 1662 for introducing an asymmetry that guarantees that the handle 24 can be inserted only in a specific direction.

For example, in the embodiment considered, the opening 1662 comprises a projection 1664 that has a shape corresponding to the cut 2766. Alternatively, there could also be provided just a single central projection 2764 in the portion 2762 of the handle 24, and the opening 1662 could comprise a corresponding cut.

Insertion of the handle 24 and coupling with the actuator 242 are thus only possible when the seat of the shaft 276, i.e., the portion 2762, and the shape on the neck of the cylindrical portion 166, i.e., the opening 1662, are aligned. By then turning the handle 24, and consequently also the actuator 242, a part of the portion 2762 will slot under a part of the neck, and the handle 24 can no longer be taken out.

In general, it is sufficient for the opening 1662 and the portion 2762 to have complementary sections that guarantee that the portion 2762 can be removed from the opening 1662 only in a specific angular position, whereas the shaft 276 cannot be removed from the opening 1662 in the other angular positions. According to the invention, said angular position corresponds to a position in which the switching mechanism interrupts the connection between the fixed contacts 162.

As mentioned previously, in the embodiment considered, the handle 24 can be positioned in at least three operative positions.

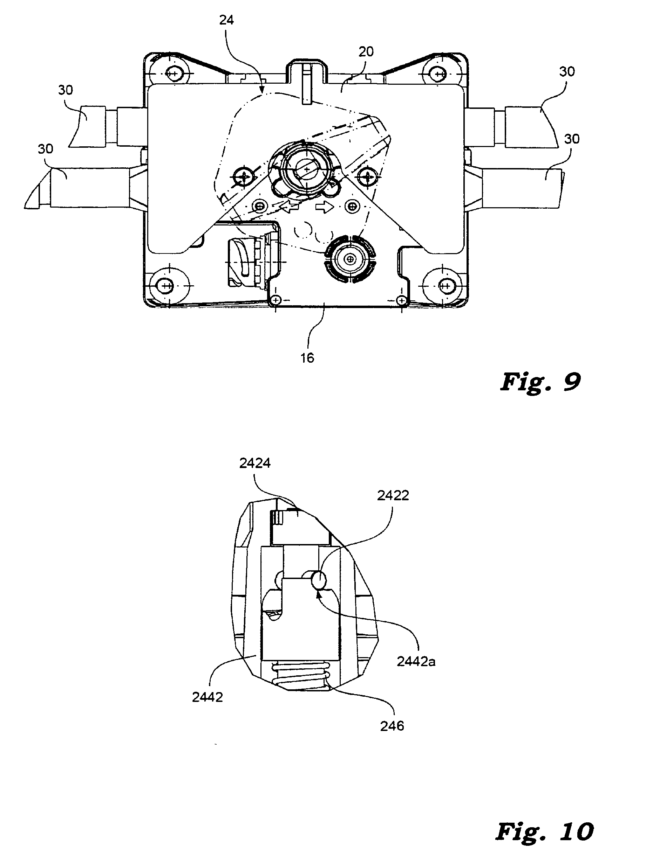

For example, Figure 9 shows an embodiment in which the handle 24 is in the third position, i.e., in the operative second position in which the handle 24 can be inserted or removed.

In this position, the handle 24 is turned in such a way that the rectangular section of the portion 2762 corresponds to the rectangular section of the opening 1662.

As mentioned previously, in this position, the manual switching mechanism is configured for interrupting the electrical connection between the fixed contacts 162.

For example, Figure 10 shows an embodiment of switching mechanism, where the projections 2422 of the actuator 242 are in a stable operative first position that is defined by a first seat 2442a in the cam 2442 of the shaft 244. In particular, the shaft 244 is pushed into this position against the force of the spring 246 downwards and thus interrupts the electrical connection between the fixed contacts 162.

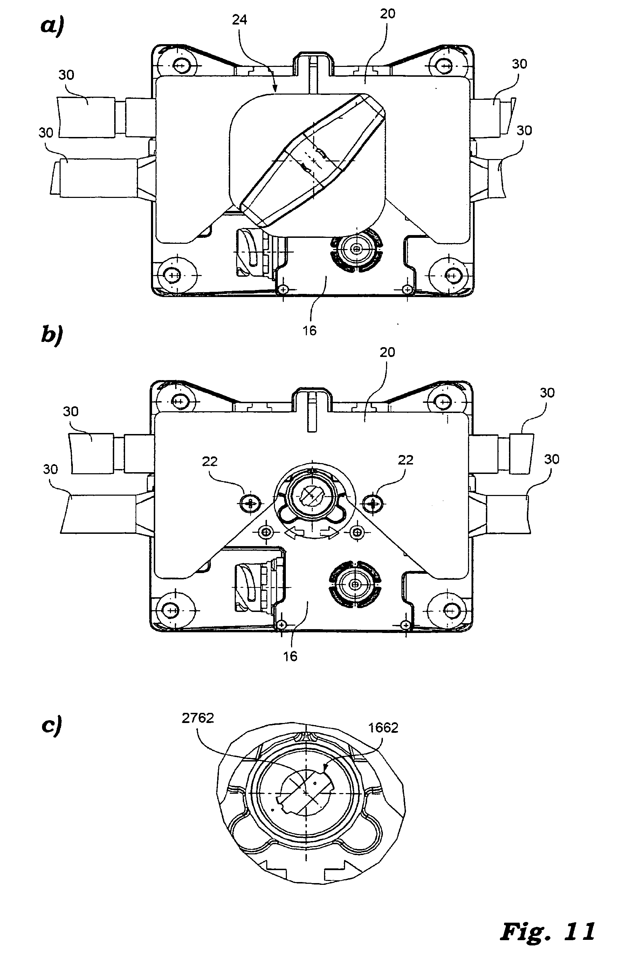

Instead, Figures 11a to 11c show an embodiment in which the handle 24 is in the second position, i.e., in the operative first position, where the contactor 10 is de-activated via the manual switching mechanism.

With reference to Figures 11b and 11c, the rectangular section of the portion 2762 is turned with respect the rectangular section of the opening 1662 and, consequently, the handle 24 cannot be taken out.

A comparison between Figure 11a and Figure 11b highlights also the fact that the handle 24 covers the screws 22 rendering them inaccessible when the handle 24 is fixed to the contactor 10.

As mentioned previously, the manual switching mechanism is configured for interrupting the electrical connection between the fixed contacts 162 in this position.

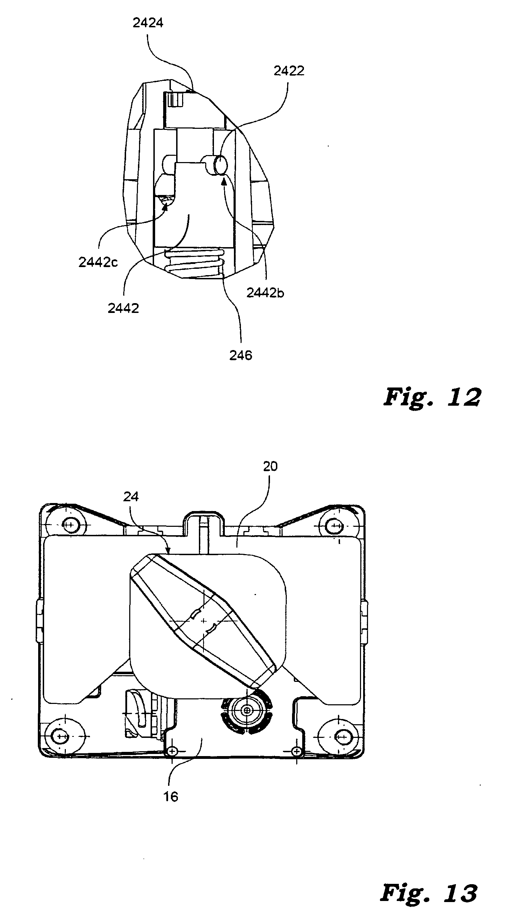

For example, Figure 12 shows an embodiment of the manual switching mechanism, where the projections 2422 of the actuator 242 are in a stable operative second position that is defined by a second seat 2442b in the cam 2442 of the shaft 244. Also in this position, the shaft 244 is pushed against the force of the spring 246 downwards and interrupts the electrical connection between the fixed contacts 162.

Finally, Figure 13 shows an embodiment in which the handle 24 is in the first position, i.e., in the inoperative position in which the contactor 10 is ready and can be activated via the electromagnetic control devices 142. Also in this position, the rectangular section of the portion 2762 is turned with respect to the rectangular section of the opening 1662, and consequently the handle 24 cannot be removed.

In the embodiment considered, the projections 2422 of the actuator 242 are in a stable operative third position that is defined by a third seat 2442c in the cam 2442 of the shaft 244 (see, for example, Figure 12). In this position, the shaft 244 is pushed by the force of the spring 246 upwards, and the mechanism does not interfere with the electrical connection between the fixed contacts 162.

Figure 13 also shows that the protection plate 20 considered herein has a shape such as to cover the entire fixed contacts 162 of the contactor 10.

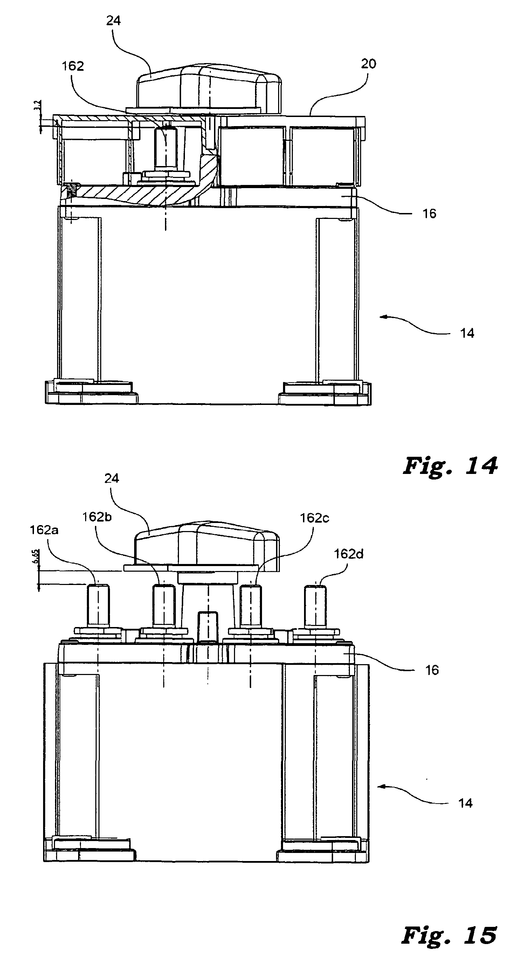

Instead, Figure 14 shows that the plate 20 is mounted at a relatively short distance from the upper side of the fixed contacts 162 in such a way that the user will not be able to remove an electric cable 30 from the respective fixed contact 162. For example, in the embodiment considered, the plate 20 is mounted at a distance of less than 3.2 mm. However, in the embodiment considered, it is sufficient for said distance to be less than the thickness of the locknut 32.

Consequently, none of the fixed contacts 162 are accessible when the plate 20 is fixed to the casing 12 of the contactor 10. However, this is not the case if the user has not mounted the protection plate 20.

In one embodiment, to prevent this problem at least partially, at least one part of the fixed contacts is set under the handle 24, i.e., under the base plate 272.

For example, Figure 15 shows an embodiment where the contacts for the connection to the load, i.e., the fixed contacts 162b and 162c, are set under the handle 24.

Figure 15 also shows that the base 272 of the handle 24 is mounted at a relatively short distance from the upper side of the fixed contacts 162b and 162c in such a way that the user will be unable to remove an electric cable 30 from the respective fixed contact. For example, in the embodiment considered, the base 272 is mounted at a distance of less than 6.65 mm. However, also in this case, it is sufficient for said distance to be less than the thickness of the locknut 32.

Of course, without prejudice to the principle of the invention, the details of construction and the embodiments may vary, even significantly, with respect to what is illustrated herein purely by way of non-limiting example, without thereby departing from the scope of the invention, as defined by the annexed claims.

## Claims

1. A contactor (10) comprising:
- a stationary casing (12, 14, 16) bearing at least two fixed contacts (162);
- mechanical switching means (242-254) adapted to interrupt the electrical connection between said at least two fixed contacts (162), wherein said mechanical means (242-254) are set within said casing (12, 14, 16); and
- a handle (24), which is accessible from outside the casing to command said mechanical switching means (242-254) and moveable between an inoperative position and an operative first position in which said mechanical switching means (242-254) interrupt the electrical connection between said fixed contacts (162),
**characterized in that** said handle (24) has a shape configured to prevent an electric cable (30) from being removed from at least one of said fixed contacts (162b, 162c) when said handle (24) is in said inoperative position, wherein said contactor comprises a protection (20) configured for covering said at least two fixed contacts (162), and wherein said handle (24) and said protection (20) have shapes configured to prevent said protection (20) from being removed from said contactor (10) when said handle (24) is in said inoperative position.

2. The contactor according to Claim 1, wherein said contactor comprises fixing means (22) for fixing said protection (20) to said casing (12, 14, 16), and wherein said handle (24) has a shape such that it covers at least one of said fixing means (22) when it is in said inoperative position, rendering it inaccessible.

3. The contactor according to any one of the preceding claims, wherein said handle (24) in moveable into an operative second position, in which said mechanical switching means (242-254) interrupt the electrical connection between said fixed contacts (162), and wherein said operative second position is a position in which said handle (24) can be removed from said contactor (10).

4. The contactor according to Claim 3, wherein said casing (12, 14, 16) comprises an opening (1662), into which a portion (2762) of said handle (24) can be inserted for coupling said handle (24) and said mechanical switching means (242-254) together.

5. The contactor according to Claim 4, wherein the shape of said opening (1662) and the cross section of said portion (2762) of said handle (24) are substantially complementary to guarantee that said portion (2762) of said handle (24) can be removed from said opening (1662) only when said handle is in said operative second position.

6. The contactor according to any one of the preceding claims, wherein said handle (24) is configured for being turned about its own axis, and wherein said mechanical switching means (242-254) comprise motion-conversion means (242, 244, 246) for converting the movement of rotation of said handle (24) into a movement of translation along the axis of said handle (24).

7. The contactor according to Claim 6, wherein said motion-conversion means (242, 244, 246) comprise a shaft with cam (244), an actuator (242) comprising at least one projection (2422) that co-operates with the cam of said shaft with cam (244), and an elastic means that presses said shaft with cam (244) against said actuator (242).

8. The contactor according to Claim 7, wherein the cam of said shaft with cam (244) comprises two seats (2442a, 2442b) that correspond to said operative first and second positions of said handle (24).

9. The contactor according to any one of the preceding claims, wherein said contactor (10) comprises an electromagnetic control device (142) bearing a mobile contact (144) for selectively closing the connection between said at least two fixed contacts (162) when said handle is in said inoperative position.

10. The contactor according to Claim 9, wherein said mechanical switching means (242-254) are configured for displacing said mobile contact (144) when said handle (24) is in said operative first or second position.

11. The contactor according to any one of the preceding claims, wherein at least one of said fixed contacts (162b, 162c) is set under said handle (24), and wherein the distance between said at least one fixed contact (162b, 162c) and said handle (24) is configured to prevent an electric cable (30) from being removed from said at least one fixed contact (162b, 162c) when said handle (24) is in said inoperative position.

## Patentansprüche

1. Schütz (10), mit:
- einem stationärem Gehäuse (12, 14, 16), das mindestens zwei feste Kontakte (162) trägt;
- mechanischen Schalteinrichtungen (242-254), die angepasst sind, die elektrische Verbindung zwischen den mindestens zwei festen Kontakten (162) zu unterbrechen, wobei die mechanischen Einrichtungen (242-254) innerhalb des Gehäuses (12, 14, 16) gesetzt sind; und
- einem Griff (24), der von außerhalb des Gehäuses zugänglich ist, um die mechanischen Schalteinrichtungen (242-254) zu beherrschen, und zwischen nicht betriebsfähigen Positionen und einer betriebsfähigen ersten Position bewegbar ist, in der die mechanischen Schalteinrichtungen (242-254) die elektrische Verbindung zwischen den festen Kontakten (162) unterbrechen,
**dadurch gekennzeichnet, dass** der Griff (24) eine Form hat, die aufgebaut ist, ein elektrisches Kabel (30) daran zu hindern, von mindestens einem der festen Kontakte (162b, 162c) entfernt zu werden, wenn der Griff (24) in der nicht betriebsfähigen Position ist, wobei der Schütz einen Schutz (20) aufweist, der aufgebaut ist, die mindestens zwei festen Kontakte (162) abzudecken, und wobei der Griff (24) und der Schutz (20) Formen haben, die aufgebaut sind, den Schutz (20) davor zu bewahren, von dem Schütz (10) entfernt zu werden, wenn der Griff (24) in der nicht betriebsfähigen Position ist.

2. Schütz nach Anspruch 1, wobei der Schütz Befestigungseinrichtungen (22) zum Befestigen des Schutzes (20) an dem Gehäuse (12, 14, 16) aufweist, und wobei der Griff (24) eine Form hat, so dass er mindestens eine der Befestigungseinrichtungen (22) abdeckt, wenn er in der nicht betriebsfähigen Position ist, wodurch er diese unerreichbar macht.

3. Schütz nach irgendeinem der vorhergehenden Ansprüche, wobei der Griff (24) in eine betriebsfähige zweite Position bewegbar ist, in der die mechanischen Schalteinrichtungen (242-254) die elektrische Verbindung zwischen den festen Kontakten (162) unterbrechen, und wobei die betriebsfähige zweite Position eine Position ist, in der der Griff (24) von dem Schütz (10) entfernt werden kann.

4. Schütz nach Anspruch 3, wobei das Gehäuse (12, 14, 16) eine Öffnung (1662) aufweist, in die ein Abschnitt (2762) des Griffes (24) zum Zusammenkoppeln des Griffes (24) und der mechanischen Schalteinrichtungen (242-254) eingeführt werden kann.

5. Schütz nach Anspruch 4, wobei die Form der Öffnung (1662) und der Querschnitt des Abschnitts (2762) des Griffes (24) im Wesentlichen komplementär sind, um zu gewährleisten, dass der Abschnitt (2762) des Griffes (24) von der Öffnung (1662) nur entfernt werden kann, wenn der Griff in der betriebsfähigen zweiten Position ist.

6. Schütz nach irgendeinem der vorhergehenden Ansprüche, wobei der Griff (24) aufgebaut ist, um seine eigene Achse gedreht zu werden, und wobei die mechanischen Schalteinrichtungen (242-254) Bewegungsumwandlungseinrichtungen (242, 244, 246) aufweisen, um die Rotationsbewegung des Griffes (24) in eine Translationsbewegung entlang der Achse des Griffes (24) umzuwandeln.

7. Schütz nach Anspruch 6, wobei die Bewegungsumwandlungseinrichtung (242, 244, 246) eine Welle mit einer Nocke (244), ein Betätigungsglied (242) mit mindestens einem Vorsprung (2422), der mit der Nocke der Welle mit Nocke (244) kooperiert, und eine elastische Einrichtung aufweist, die die Welle mit Nocke (244) gegen das Stellglied (242) drückt.

8. Schütz nach Anspruch 7, wobei die Nocke der Welle mit Nocke (244) zwei Sitze (2442a, 2442b) aufweist, die der betriebsfähigen ersten und zweiten Position des Griffes (24) entsprechen.

9. Schütz nach irgendeinem der vorhergehenden Ansprüche, wobei der Schütz (10) eine elektromagnetische Steuerungsvorrichtung (142) aufweist, die einen mobilen Kontakt (144) zum wahlweisen Schließen der Verbindung zwischen den mindestens zwei festen Kontakten (162) trägt, wenn der Griff in der nicht betriebsfähigen Position ist.

10. Schütz nach Anspruch 9, wobei die mechanischen Schalteinrichtungen (242-254) gestaltet sind, den mobilen Kontakt (144) zu versetzen, wenn der Griff (24) in der betriebsfähigen ersten oder zweiten Position ist.

11. Schütz nach irgendeinem der vorhergehenden Ansprüche, wobei mindestens einer der festen Kontakte (162b, 162c) unter dem Griff (24) gesetzt ist, und wobei der Abstand zwischen dem mindestens einen festen Kontakt (162b, 162c) und dem Griff (24) gestaltet ist, ein elektrisches Kabel (30) daran zu hindern, von dem mindestens einen festen Kontakt (162b, 162c) entfernt zu werden, wenn der Griff (24) in der nicht betriebsfähigen Position ist.

## Revendications

1. Contacteur (10) comprenant :
un boîtier fixe (12, 14, 16) supportant au moins deux contacts fixes (162) ;
des moyens de commutation mécaniques (242-254) adaptés pour couper la connexion électrique entre lesdits au moins deux contacts fixes (162), dans lequel lesdits moyens de mécaniques (242-254) sont placés dans ledit boîtier (12, 14, 16) ; et
une poignée (24), qui est accessible depuis l'extérieur du boîtier pour commander lesdits moyens de commutation mécaniques (242-254) et mobile entre une position non fonctionnelle et une première position fonctionnelle dans laquelle lesdits moyens de commutation mécaniques (242-254) coupent la connexion électrique entre lesdits contacts fixes (162),
**caractérisé en ce que** ladite poignée (24) a une forme configurée pour empêcher un câble électrique (30) d'être enlevé d'au moins l'un desdits contacts fixes (162b, 162c) quand ladite poignée (24) est dans ladite position non fonctionnelle, dans lequel ledit contacteur comprend une protection (20) configurée pour couvrir lesdits au moins deux contacts fixes (162), et dans lequel ladite poignée (24) et ladite protection (20) ont des formes configurées pour empêcher ladite protection (20) d'être enlevée dudit contacteur (10) quand ladite poignée (24) est dans ladite position non fonctionnelle.

2. Contacteur selon la revendication 1, dans lequel ledit contacteur comprend des moyens de fixation (22) pour fixer ladite protection (20) sur ledit boîtier (12, 14, 16), et dans lequel ladite poignée (24) a une forme telle qu'elle couvre au moins l'un desdits moyens de fixation (22) quand elle est dans ladite position non fonctionnelle, le rendant inaccessible.

3. Contacteur selon l'une quelconque des revendications précédentes, dans lequel ladite poignée (24) est mobile dans une seconde position fonctionnelle, dans laquelle lesdits moyens de commutation mécaniques (242-254) coupent la connexion électrique entre lesdits contacts fixes (162), et dans lequel ladite seconde position non fonctionnelle est une position dans laquelle ladite poignée (24) peut être enlevée dudit contacteur (10).

4. Contacteur selon la revendication 3, dans lequel ledit boîtier (12, 14, 16) comprend une ouverture (1662), dans laquelle une partie (2762) de ladite poignée (24) peut être insérée pour coupler ensemble ladite poignée (24) et lesdits moyens de commutation mécaniques (242-254).

5. Contacteur selon la revendication 4, dans lequel la forme de ladite ouverture (1662) et la section transversale de ladite partie (2762) de ladite poignée (24) sont sensiblement complémentaires pour garantir que ladite partie (2762) de ladite poignée (24) peut être enlevée de ladite ouverture (1662) seulement quand ladite poignée est dans ladite seconde position fonctionnelle.

6. Contacteur selon l'une quelconque des revendications précédentes, dans lequel ladite poignée (24) est configurée pour être tournée autour de son propre axe, et dans lequel lesdits moyens de commutation mécaniques (242-254) comprennent des moyens de conversion de mouvement (242, 244, 246) pour convertir le mouvement de rotation de ladite poignée (24) en un mouvement de translation le long de l'axe de ladite poignée (24).

7. Contacteur selon la revendication 6, dans lequel lesdits moyens de conversion de mouvement (242, 244, 246) comprennent un arbre à came (244), un actionneur (242) comprenant au moins une saillie (2422) qui coopère avec la came dudit arbre à came (244), et des moyens élastiques qui pressent ledit arbre à came (244) contre ledit actionneur (242).

8. Contacteur selon la revendication 7, dans lequel la came dudit arbre à cames (244) comprend deux sièges (2442a, 2442b) qui correspondent auxdites première et seconde positions fonctionnelles de ladite poignée (24).

9. Contacteur selon l'une quelconque des revendications précédentes, dans lequel ledit contacteur (10) comprend un dispositif de commande électromagnétique (142) supportant un contact mobile (144) pour fermer sélectivement la connexion entre lesdits au moins deux contacts fixes (162) quand ladite poignée est dans ladite position non fonctionnelle.

10. Contacteur selon la revendication 9, dans lequel lesdits moyens de commutation mécaniques (242-254) sont configurés pour déplacer ledit contact mobile (144) quand ladite poignée (24) est dans ladite première ou seconde position fonctionnelle.

11. Contacteur selon l'une quelconque des revendications précédentes, dans lequel au moins l'un desdits contacts fixes (162b, 162c) est placé sous ladite poignée (24), et dans lequel la distance entre ledit au moins un contact fixe (162b, 162c) et ladite poignée (24) est configurée pour empêcher un câble électrique (30) d'être enlevé dudit au moins un contact fixe (162b, 162c) quand ladite poignée (24) est dans ladite position non fonctionnelle.
